# EUROPEAN PATENT SPECIFICATION

(11) **EP 3 318 779 B1**
(45) Date of publication and mention of the grant of the patent: **17.03.2021**
(21) Application number: 16821092.0
(22) Date of filing: 12.05.2016
(51) Int. Cl.: F16F 15/126, F16F 15/12, F16H 55/36, F16F 15/124

(54) **DAMPER FOR ABSORBING ROTATIONAL VARIATION**
DÄMPFER ZUR ABSORPTION EINER DREHVARIATION
AMORTISSEUR POUR ABSORBER UNE VARIATION DE ROTATION

(30) Priority: 03.07.2015 JP 2015134397
(43) Date of publication of application: 09.05.2018
(73) Proprietor: NOK Corporation, Tokyo 105-8585 (JP)
(72) Inventor: NARITA Nobuhiko, Tottori 683-0362 (JP)
(74) Representative: TBK
(86) International application number: PCT/JP2016/064079
(87) International publication number: WO 2017/006621

(56) References cited:
- FR-A1- 2 808 063
- FR-A1- 2 991 018
- JP-A- 2002 303 333
- JP-A- 2004 028 177
- JP-A- 2004 028 177
- JP-A- 2004 132 492
- JP-A- 2004 132 492
- JP-A- 2005 201 433
- JP-A- 2006 522 288
- JP-A- 2011 012 688
- JP-A- 2013 036 530
- JP-A- 2013 036 530
- US-A1- 2002 052 242
- US-A1- 2012 172 163
- US-A1- 2013 337 952

## Description

### BACKGROUND OF THE INVENTION

### Field of the Invention

The present invention relates to a rotational fluctuation absorbing damper in which a mechanism for absorbing rotational fluctuation is arranged in a pulley which transmits torque to a rotating device via a belt.

### Description of the Conventional Art

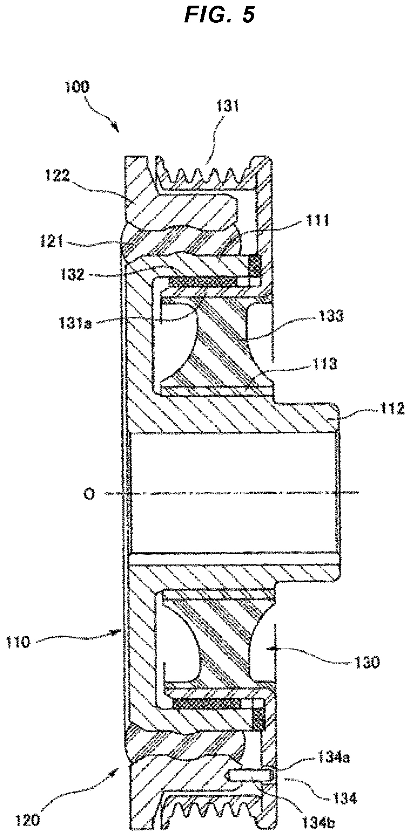

A rotational fluctuation absorbing damper is arranged in a pulley which is disposed in a leading end of a crank shaft of an engine in a motor vehicle, the rotational fluctuation absorbing damper being provided for smoothening a driving force to an auxiliary machine by absorbing the rotational fluctuation. Fig. 5 shows an example of the rotational fluctuation absorbing damper according to a prior art which is disclosed in the following patent document 1. More specifically, this kind of rotational fluctuation absorbing damper 100 is provided with a hub 110 which is attached to a shaft end of a crank shaft (not shown) and rotates integrally with the crank shaft, and a dynamic vibration absorbing portion 120 and a coupling portion 130 which are attached to the hub 110.

The dynamic vibration absorbing portion 120 is structured such that an outer tube portion 111 of the hub 110 and an annular mass body 122 arranged in an outer periphery thereof is elastically coupled via a damper rubber 121. Further, the coupling portion 130 is constructed by a pulley main body 131 which is supported to the outer tube portion 111 of the hub 110 via a bearing 132 so as to be relatively rotatable, and a coupling rubber 133 which elastically couples between a sleeve 113 fitted and attached to an outer peripheral surface of an inner tube portion 112 of the hub 110 and a support tube portion 131a of the pulley main body 131. A drive belt (not shown) is wound to the pulley main body 131, thereby transmitting a driving force of the crank shaft to various auxiliary machines such as an alternator and a water pump via the drive belt.

More specifically, this kind of rotational fluctuation absorbing damper 100 transmits the torque input to the hub 110 from the crank shaft to the pulley main body 131 while absorbing the rotational fluctuation on the basis of a twisting direction shear deforming action of the coupling rubber 133 in the coupling portion 130, and is structured such that the dynamic vibration absorbing portion 120 formed by a spring-mass system constructed by the damper rubber 121 and the annular mass body 122 resonates in a twisting direction with a resonation frequency range of the crank shaft, thereby achieving a vibration damping function of dynamically absorbing the resonance of the crank shaft.

Further, it is possible to improve a performance of absorbing the rotational fluctuation in a regular rotation region of the engine by making a twisting direction spring constant of the coupling rubber 133 in the coupling portion 130 low. However, in this case, the durability of the coupling rubber 133 is lowered so as to be easily broken. Therefore, in order to maintain the function of transmitting the driving force to the auxiliary machine via the belt even in the case that the coupling rubber 133 is broken, a stopper mechanism 134 is provided by a hole 134a which is elongated in a circumferential direction and a projection 134b which is loosely fitted to the hole 134a for restricting a relative displacement in the circumferential direction of the hub 110 and the pulley main body 131.

Further, in the conventional rotational fluctuation absorbing damper 100, the stopper mechanism 134 is comparatively small in its structure, and the stopper mechanism 134 forms a fail-safe structure where the stopper mechanism 134 does not basically function, in a state in which the coupling rubber 133 is normally activated. In the case that the coupling rubber 133 is broken, the end portion in the circumferential direction of the hole 134a and the projection 134b are in metal touch or come into contact with each other via a thin rubber layer, thereby maintaining the function of transmitting the driving force (refer to the following patent document 1). Patent document 2 discloses a rotational fluctuation absorbing damper according to the preamble to independent claim 1. Further prior art is discussed in patent documents 3, 4, and 5.

### Prior Art Document

### Patent Document

Patent Document 1: Japanese Utility Model No. 2605662
Patent Document 2: US 2002/052242 A1
Patent Document 3: JP 2013 036530 A
Patent Document 4: FR 2 808 063 A1
Patent Document 5: US 2012/172163 A1

### SUMMARY OF THE INVENTION

### Problem to be Solved by the Invention

In the meantime, the engine for traveling the motor vehicle has been conventionally started by a starter motor which is connected to a flywheel of a crank shaft. However, an idling stop vehicle has become widely used in recent years, the idling stop vehicle stopping an idling drive of the engine when stopping the traveling. In this kind of idling stop vehicle, an alternator generating power by receiving a rotating force from the crank shaft of the engine via the belt can start and rotate the crank shaft as a starter motor (hereinafter, refer to as a generator start engine).

In the case that the rotational fluctuation absorbing damper 100 as mentioned above is used in the crank shaft of the generator start engine mentioned above, the engine having a great torque is started by the alternator (the motor generator corresponding to the electric motor which is used also as the power generator) via the drive belt and the rotational fluctuation absorbing damper 100. As a result, the great torque is applied to the coupling rubber 133 of the rotational fluctuation absorbing damper 100. Further, as mentioned previously, since the coupling rubber 133 of the rotational fluctuation absorbing damper 100 is structured such as to basically have the low spring constant in the twisting direction for securing the excellent rotational fluctuation absorbing performance, the coupling rubber 133 is greatly twisted by the starting torque input from the motor generator via the drive belt. As a result, an end portion in a circumferential direction of the hole 134a of the stopper mechanism 134 and the projection 134b come into contact with each other via the metal touch or the thin rubber layer (not shown) which is provided in the inner surface of the hole 134a, thereby transmitting the starting torque to the hub 110 side. Therefore, a hammering sound is generated every time the starting torque from the motor generator is input, the vibration and the rotational fluctuation are further transmitted via the stopper mechanism 134, and the vibration preventing performance may be deteriorated so as to impair the quietness.

As a result, the conventional structure is limited to the function serving as the fail-safe function that the stopper mechanism 134 does not generally function, but the stopper mechanism 134 functions and maintains the function of transmitting the driving force only in the case that the coupling rubber 133 is broken.

Further, in order to prevent the vibration preventing performance from being deteriorated when the stopper mechanism 134 is activated, it is thought to cover the stopper mechanism 134 with a thick rubber layer, and it is thought to widen a contact area of the rubber layer for avoiding the stress concentration at the contacting time. However, in this case, the size of the rotational fluctuation absorbing damper 100 is enlarged, and there is fear that it becomes hard to secure an installation space.

The present invention is made by taking the points as mentioned above into consideration, and a technical object of the present invention is to provide a rotational fluctuation absorbing damper which improves a torque transmission force and a vibration preventing performance without bringing about the enlargement in size.

### Means for Solving the Problem

The present invention employs the following means for achieving the technical object mentioned above.

More specifically, a rotational fluctuation absorbing damper according to the present invention has the features of independent claim 1.

In the structure mentioned above, in the case that the amount of relative displacement in the circumferential direction of the hub and the pulley main body on the basis of the input of the transmission torque is less than the predetermined value, the spring constant is kept in the low state on the basis of a shear deformation of the coupling rubber in the circumferential direction, and in the case that the amount of relative displacement in the circumferential direction of the hub and the pulley main body becomes equal to or more than the predetermined value, the buffer portions of the coupling rubber are compressed by the first projections of the hub and the second projections of the pulley main body which are brought into contact with the buffer portions from both sides in the circumferential direction. As a result, the great torque transmission force is secured, and the desired vibration preventing performance is secured. Further, since it is possible to make a contact area and a volume in the circumferential direction of the buffer portions of the coupling rubber in relation to the first projections and the second projections sufficiently great, the stress when being compressed from the first projections and the second projections becomes small.

### Effect of the Invention

On the basis of the rotational fluctuation absorbing damper according to the present invention, it is possible to suppress an excessive deformation of the coupling rubber even in a state in which the coupling rubber is in a normal twisting deformation range, without bringing about any enlargement in size, and it is possible to maintain the excellent vibration preventing performance and improve the torque transmission force.

### BRIEF EXPLANATION OF THE DRAWINGS

Fig. 1 is a front elevational view of a preferable embodiment of a rotational fluctuation absorbing damper according to the present invention as seen from a front side of an engine;
Fig. 2 is a cross sectional view along a line II-II' in Fig. 1;
Fig. 3 is a cross sectional view along a line III-III' in Fig. 1;
Fig. 4 is a front elevational view of a shape modified example of a first projection and a second projection in a preferable embodiment of the rotational fluctuation absorbing damper according to the present invention as seen from the front side of the engine; and
Fig. 5 is a front elevational view of an example of a conventional rotational fluctuation absorbing damper as seen from the front side of the engine.

### DETAILED DESCRIPTION OF PREFERRED EMBODIMENTS

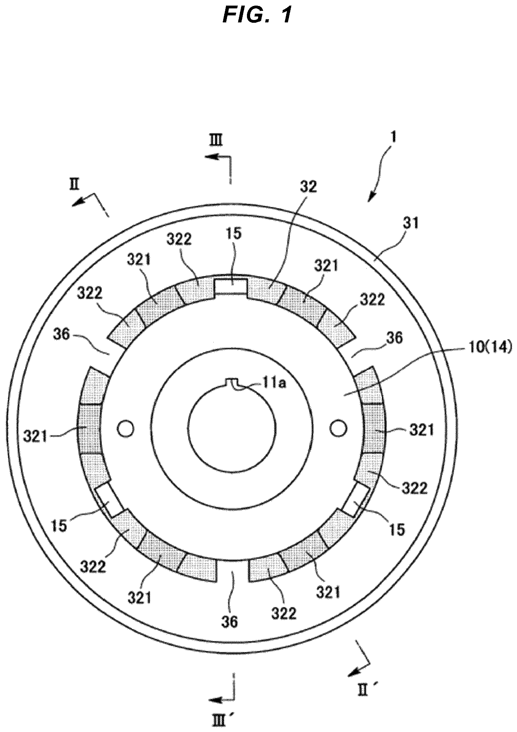

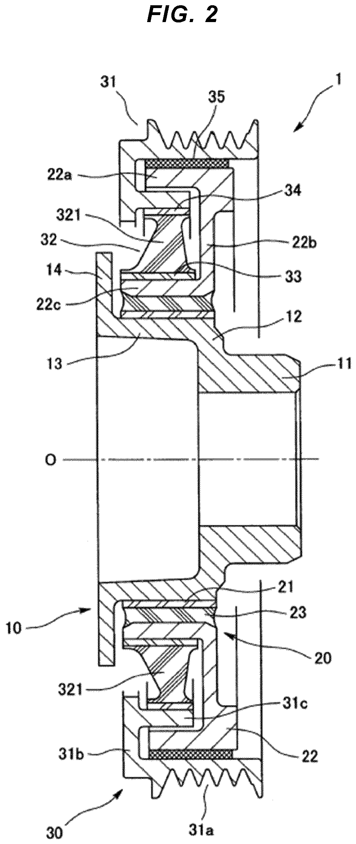

A description will be given below of a preferable embodiment of a rotational fluctuation absorbing damper according to the present invention with reference to Figs. 1 to 3. In the following description, "front surface side" means a left side in Fig. 2, that is, a front side of a vehicle, and "back surface side" means a right side in Fig. 2, that is, a side where an engine (not shown) exists.

A rotational fluctuation absorbing damper 1 is provided with a hub 10 which is attached to an end portion of a crank shaft (not shown) in an engine of a motor vehicle, and a dynamic vibration absorbing portion 20 and a coupling 30 which are attached to the hub 10 in series each other.

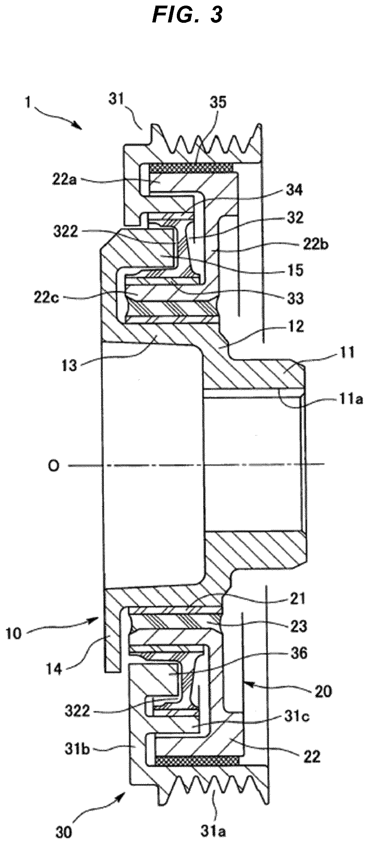

The hub 10 is made of metal, and is provided with an attaching tube portion 11 which is fixed to the crank shaft, a support tube portion 13 which extends to a front surface side therefrom via a step portion 12, and a collar portion 14 which expands to an outer diameter side from an end portion of the support tube portion 13 in the front surface side, as shown in Figs. 2 and 3. Reference symbol 11a denotes a key groove which is formed in an inner peripheral surface of the attaching tube portion 11.

The dynamic vibration absorbing portion 20 is structured such that the hub 10 and an annular mass body 22 are elastically coupled via an annular damper rubber 23. The annular mass body 22 is arranged in an outer periphery of the hub and made of the metal. In more detail, the annular mass body 22 has a support tube portion 22a, a back surface end wall portion 22b which extends in a radial direction from an end portion of a rear surface side of the support tube portion 22a, and a supported tube portion 22c which extends to a front surface side from an inner diameter end of the back surface end wall portion 22b and is positioned in an outer peripheral side of the support tube portion 13 in the hub 10, and a damper rubber 23 made of a rubber elastic body (a rubber material or a synthetic resin material having a rubber elasticity) is integrally formed between an outer peripheral surface of a sleeve 21 which is pressed into and fitted to an outer peripheral surface of the support tube portion 13 in the hub 10 with an appropriate interference and is made of the metal, and an inner peripheral surface of the supported tube portion 22c of the annular mass body 22.

A natural frequency of the dynamic vibration absorbing portion 20 in the twisting direction (the circumferential direction) is tuned so as to conform to a predetermined frequency range where a twisting angle of the crank shaft becomes maximum, that is, a twisting direction resonating frequency of the crank shaft due to the engine vibration, on the basis of a circumferential direction inertia mass of the annular mass body 22 and a twisting direction shear spring constant of the damper rubber 23.

The coupling portion 30 is structured such that a pulley main body 31 and the annular mass body 22 in the dynamic vibration absorbing portion 20 are coupled via a coupling rubber 32 so as to be relatively displaceable each other in the circumferential direction. The dynamic vibration absorbing portion 20 is a member closer to the hub 10 side as seen from the coupling rubber 32. More specifically, the coupling rubber 32 couples the pulley main body 31 and the annular mass body 22 which corresponds to the hub 10 side.

In more detail, the pulley main body 31 is supported to an outer peripheral surface of the support tube portion 22a of the annular mass body 22 in the dynamic vibration absorbing portion 20 via a slide bearing 35 so as to be relatively rotatable, forms a poly-V groove 31a for winding a drive belt (not shown) thereto on an outer peripheral surface, and has a supported tube portion 31c which wraps around an inner peripheral side of the support tube portion 22a in the annular mass body 22 via an end wall portion 31b which extends in a radial direction from an end portion in the front surface side.

Further, the coupling rubber 32 is integrally vulcanized by a rubber elastic body between an inner peripheral sleeve 33 which is pressed into and fitted to an outer peripheral surface of the supported tube portion 22c of the annular mass body 22 with an appropriate interference and is made of the metal, and an outer peripheral sleeve 34 which is pressed into and fitted to an inner peripheral surface of the supported tube portion 31c of the pulley main body 31 with an appropriate interference and is made of the metal, and is structured such that the twisting direction shear spring constant is sufficiently lower than that of the damper rubber 23, and an allowable amount of deformation to the twisting direction is great.

As shown in Figs. 1 and 3, the collar portion 14 of the hub 10 is provided with a plurality of (three in the example shown in Fig. 1) first projections 15 protruding out of an outer peripheral end of the collar portion 14 at predetermined intervals (intervals of 120 degree in the example shown in Fig. 1) in the circumferential direction, and the pulley main body 31 is provided with a plurality of (three in the example shown in Fig. 1) second projections 36 protruding out of in inner peripheral end of an end wall portion 31b of the pulley main body and positioned between respective the first projections 15 at predetermined intervals (intervals of 120 degree in the illustrated example) in the circumferential direction. Further, in a free state, the first projections 15 and the second projections 36 are positioned at uniform intervals (intervals of 60 degree in the example shown in Fig. 1) in the circumferential direction.

As shown in Fig. 2, a plurality of (the number corresponding to sum of the first projections 15 and the second projections 36; six in the example shown in Fig. 1) buffer portions 321 are formed in the coupling rubber 32 at predetermined intervals (intervals of 60 degree in the example shown in Fig. 1), the buffer portions 321 extending in a radial direction between the inner peripheral sleeve 33 and the outer peripheral sleeve 34. Loosely fitted concave portions 322 are provided between the respective buffer portions 321, each of the loosely fitted concave portions 322 having a shape obtained by being hollowed out of the front surface side as shown in Fig. 3, and the first projections 15 and the second projections 36 are accommodated in the loosely fitted concave portions 322 in a loosely fitted state.

Further, in a free state, each of the first projections 15 and the second projections 36 exists at an intermediate position of the loosely fitted concave portion 322 in the circumferential direction. More specifically, the buffer portion 321 exists at an intermediate position in the circumferential direction between the first projection 15 and the second projection 36. In the case that the amount of relative displacement in the circumferential direction between the hub 10 and the pulley main body 31 becomes equal to or more than a predetermined value due to the transmission torque input, the first projection 15 and the second projection 36 are brought into contact with the buffer portion 321 from both sides in the circumferential direction thereof.

The rotational fluctuation absorbing damper 1 according to the embodiment having the above structure is rotated together with the crank shaft since the attaching tube portion 11 of the hub 10 is installed to the shaft end of the crank shaft (not shown). Further, the rotation of the crank shaft is transmitted to the pulley main body 31 from the hub 10 via the sleeve 21 of the dynamic vibration absorbing portion 20, the damper rubber 23 and the annular mass body 22, and the sleeve 33 and the coupling rubber 32 of the coupling portion 30, and is further transmitted to the rotating shaft of the auxiliary machine via the drive belt (not shown) which is wound to the poly-V groove 31a of the pulley main body 31.

Further, the dynamic vibration absorbing portion 20 resonates in the twisting direction within the frequency range where the twisting angle of the crank shaft becomes maximum due to the engine vibration, and the torque caused by the resonation becomes reverse to the direction of the torque caused by the input vibration, thereby achieving the dynamic vibration absorbing function. As a result, it is possible to effectively reduce the peak of the twisting angle of the crank shaft.

Further, in the case that the rotational fluctuation of the crank shaft is input, the coupling rubber 32 with a low spring in the coupling portion 30 shear deforms in the twisting direction between the annular mass body 22 in the hub 10 side and the pulley main body 31. Further, the coupling rubber 32 is coupled in series to the damper rubber 23 between the hub 10 and the pulley main body 31. As a result, the rotational fluctuation absorbing damper 1 is a sufficiently low spring in relation to the twisting direction, and the rotational fluctuation is effectively absorbed accordingly, and the rotation transmitted to the drive belt wound to the poly-V groove 31a of the pulley main body 31 is smoothened.

Further, when the amount of relative displacement in the circumferential direction of the hub 10 and the pulley main body 31 reaches a predetermined magnitude, the first projection 15 in the hub 10 side and the second projection 36 in the pulley main body 31 side come into pressure contact with each of the buffer portions 321 of the coupling rubber 32 from both sides in the circumferential direction. As a result, the twisting direction spring constant caused by the coupling rubber 32 rises nonlinearly and the stopper function works in such a manner as to suppress the excessive relative displacement of the hub 10 and the pulley main body 31 in the circumferential direction (the excessive twisting deformation of the coupling rubber 32).

At this time, the first projection 15 and the second projection 36 does not metal touch, and each of the buffer portions 321 of the coupling rubber 32 is interposed between both the projections. As a result, any discordant noise is not generated by the metal touch when the stopper mechanism works. Further, the first projection 15 and the second projection 36 are allowed to relatively displace in the circumferential direction while accompanying the deformation of the buffer portion 32, that is, the hub 10 and the pulley main body 31 are allowed to relatively displace in the circumferential direction, even after the contact between the buffer portion 321 of the coupling rubber 32, and the first projection 15 and the second projection 36. Accordingly, a desired vibration preventing function is secured even in a state in which the stopper function caused by the contact between the buffer portion 32, and the first projection 15 and the second projection 36 works.

Further, since a contact area between the first projection 15 and the second projection 36, and each of the buffer portions 321 of the coupling rubber 32 can be set to be sufficiently great, and a volume in the circumferential direction of each of the buffer portions 321 can be made sufficiently great, it is possible to secure an excellent durability by making the pressure caused by the pressure contact with the first projection 15 and the second projection 36 small.

For example, in the case that the alternator generating power by the application of the rotating force via the drive belt which is wound to the poly-V groove 31a of the pulley main body 31 functions as a starter which starts the engine, that is, in the case that the alternator is a motor generator, the starting torque of the motor generator is transmitted to the crank shaft from the drive belt via the rotational fluctuation absorbing damper 1 when starting the engine. At this time, a strong torque acts on the coupling rubber 32, however, the first projection 15 in the hub 10 side and the second projection 36 in the pulley main body 31 side come into pressure contact with each of the buffer portions 321 of the coupling rubber 32 from both sides in the circumferential direction in the same manner as mentioned above, on the basis of the starting torque, whereby the twisting direction spring constant of the coupling rubber 32 rises nonlinearly. Therefore, the great torque transmission force for starting the crank shaft is secured.

Further, according to the structure mentioned above, since the coupling rubber 32 is taken charge of the function of the stopper mechanism, the enlargement in size of the rotational fluctuation absorbing damper 1 is not brought about.

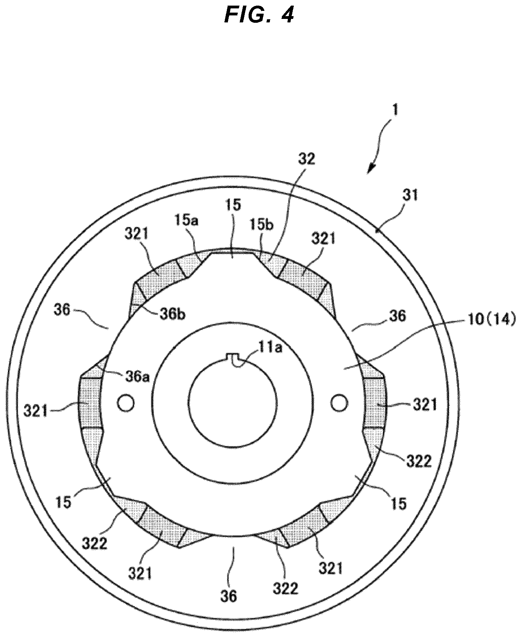

In the case that the coupling rubber 32 shear deforms in the twisting direction between the annular mass body 22 in the hub 10 side and the pulley main body 31 on the basis of the input of the rotational fluctuation, each of the buffer portions 321 formed in the coupling rubber 32 is exposed diagonally to the deformation. As a result, in order to effectively compress the buffer portion 321 by bringing the first projection 15 and the second projection 36 into contact with the buffer portion 321 with a wide area when the amount of relative displacement of the hub 10 and the pulley main body 31 in the circumferential direction reaches the predetermined magnitude, it is preferable to form the first projection 15 and the second projection 36 into a chevron shape or a trapezoidal shape so that both side surfaces 15a, 15b, 36a and 36b thereof in the circumferential direction form a diagonal surface corresponding to the deforming shape of the buffer portion 321, as shown in Fig. 4.

Further, in the rotational fluctuation absorbing damper 1 according to the illustrated embodiment, the coupling rubber 32 is coupled to the hub 10 via the dynamic vibration absorbing portion 20 which is in the hub 10 side. However, the present invention can be applied to a structure in which the coupling rubber 32 is coupled to the hub, for example, as shown in Fig. 5.

### Description of Reference Numerals

- 1: rotational fluctuation absorbing damper
- 10: hub
- 15: first projection
- 20: dynamic vibration absorbing portion
- 22: annular mass body
- 23: damper rubber
- 30: coupling portion
- 31: pulley main body
- 32: coupling rubber
- 321: buffer portion
- 322: loosely fitted concave portion
- 36: second projection

## Claims

1. A rotational fluctuation absorbing damper (1) comprising:
a hub (10);
a pulley main body (31) which is arranged concentrically with the hub (10) and in a relatively rotatable state; and
a coupling rubber (32) which couples a side of the hub (10) and a side of the pulley main body (31) in such a manner as to be relatively displaceable in a circumferential direction, wherein
a plurality of first projections (15) are provided in the hub at predetermined intervals in a circumferential direction,
a plurality of second projections (36) are provided in the pulley main body (31) at predetermined intervals in the circumferential direction while being positioned between the plurality of first projections (15),
buffer portions (321) positioned between the first projections (15) and the second projections (36) are formed in the coupling rubber (32), and
**characterized in that**
loosely fitted concave portions (322) are provided between the respective buffer portions (321), each of the loosely fitted concave portions (322) having a shape obtained by being hollowed out of the front surface side,
the first projections (15) and the second projections (36) are accommodated in the loosely fitted concave portions (322) in a loosely fitted state,
in a free state, each of the first projections (15) and the second projections (36) exists at an intermediate position of the loosely fitted concave portion (322) in the circumferential direction, and
the first projections (15) and the second projections (36) are brought into contact with the buffer portions (321) from both sides in the circumferential direction in the case that an amount of relative displacement in the circumferential direction of the hub (10) and the pulley main body (31) is equal to or more than a predetermined value.

## Patentansprüche

1. Rotationsschwankungsabsorptionsdämpfer (1) mit:
einer Nabe (10);
einem Riemenscheibenhauptkörper (31), der mit der Nabe (10) konzentrisch und in einem relativ drehbaren Zustand angeordnet ist; und
einem Kopplungsgummi (32), der eine Seite der Nabe (10) und eine Seite des Riemenscheibenhauptkörpers (31) in solch einer Weise koppelt, um in einer Umfangsrichtung relativ verlagerbar zu sein, wobei
eine Vielzahl von ersten Vorsprüngen (15) in der Nabe in vorbestimmten Abständen in einer Umfangsrichtung vorgesehen sind,
eine Vielzahl von zweiten Vorsprüngen (36) in dem Riemenscheibenhauptkörper (31) in vorbestimmten Abständen in der Umfangsrichtung vorgesehen sind, während diese zwischen der Vielzahl von ersten Vorsprüngen (15) positioniert sind,
Pufferabschnitte (321), die zwischen den ersten Vorsprüngen (15) und den zweiten Vorsprüngen (36) positioniert sind, in dem Kopplungsgummi (32) ausgebildet sind, und
**gekennzeichnet dadurch, dass**
lose gepasste konkave Abschnitte (322) zwischen den jeweiligen Pufferabschnitten (321) vorgesehen sind, wobei jeder der lose gepassten konkaven Abschnitte (322) eine Form hat, die durch ein Aushöhlen der Vorderflächenseite erhalten wird,
die ersten Vorsprünge (15) und die zweiten Vorsprünge (36) in den lose gepassten konkaven Abschnitten (322) in einem lose gepassten Zustand aufgenommen sind,
in einem freien Zustand jeder von den ersten Vorsprüngen (15) und den zweiten Vorsprüngen (36) an einer Zwischenposition des lose gepassten konkaven Abschnitts (322) in der Umfangsrichtung vorhanden ist, und
die ersten Vorsprünge (15) und die zweiten Vorsprünge (36) mit den Pufferabschnitten (321) von beiden Seiten in der Umfangsrichtung in dem Fall in Kontakt gebracht werden, dass ein Betrag einer relativen Verlagerung in der Umfangsrichtung der Nabe (10) und des Riemenscheibenhauptkörpers (31) gleich einem oder mehr als ein vorbestimmter Wert ist.

## Revendications

1. Amortisseur (1) pour absorber une fluctuation de rotation comprenant :
un moyeu (10) ;
un corps principal de poulie (31) qui est agencé, de manière concentrique, avec le moyeu (10) et dans un état relativement rotatif ; et
un caoutchouc de couplage (32) qui couple un côté du moyeu (10) et un côté du corps principal de poulie (31) afin de pouvoir se déplacer relativement dans une direction circonférentielle, dans lequel :
une pluralité de premières saillies (15) sont prévues dans le moyeu à intervalles prédéterminés dans une direction circonférentielle,
une pluralité de secondes saillies (36) sont prévues dans le corps principal de poulie (31) à intervalles prédéterminés dans la direction circonférentielle tout en étant positionnées entre la pluralité de premières saillies (15),
des parties tampons (321) positionnées entre les premières saillies (15) et les secondes saillies (36), sont formées dans le caoutchouc de couplage (32) et **caractérisé en ce que** :
des parties concaves (322) ajustées sans serrage sont prévues entre les parties tampons (321) respectives, chacune des parties concaves (322) ajustées sans serrage ayant une forme obtenue en étant creusée du côté de la surface avant,
les premières saillies (15) et les secondes saillies (36) sont logées dans les parties concaves (322) ajustées sans serrage dans un état ajusté sans serrage,
dans un état libre, chacune des premières saillies (15) et des secondes saillies (36) existe dans une position intermédiaire de la partie concave (322) ajustée sans serrage dans la direction circonférentielle, et
les premières saillies (15) et les secondes saillies (36) sont amenées en contact avec les parties tampons (321) à partir des deux côtés dans la direction circonférentielle dans le cas dans lequel une quantité de déplacement relatif dans la direction circonférentielle du moyeu (10) et du corps principal de poulie (31) est égale ou supérieure à une valeur prédéterminée.
